# EUROPEAN PATENT SPECIFICATION

(11) **EP 1 379 397 B1**
(45) Date of publication and mention of the grant of the patent: **25.08.2004**
(21) Application number: 02727548.6
(22) Date of filing: 09.04.2002
(51) Int. Cl.: B60C 1/00, C08L 21/00, C08L 23/16

(54) **TYRE COMPRISING AN ETHYLENE COPOLYMER, TREAD BAND AND ELASTOMERIC COMPOSITION USED THEREIN**
REIFEN DER EIN ETHYLEN-COPOLYMER ENTHÄLT, LAUFFLÄCHE UND DARIN BENUTZTE ELASTOMERMISCHUNG
PNEUMATIQUE COMPRENANT UN COPOLYMERE D'ETHYLENE, BANDE DE ROULEMENT ET COMPOSITION ELASTOMERE UTILISEE DANS LA PRODUCTION DE CEUX-CI

(30) Priority: 13.04.2001 EP 01109205; 23.04.2001 US 285270 P; 13.07.2001 EP 01117106; 20.07.2001 US 306405 P
(43) Date of publication of application: 14.01.2004
(73) Proprietor: PIRELLI PNEUMATICI S.p.A., 20126 Milano (IT)
(72) Inventor: GALIMBERTI, Maurizio, I-20133 Milano (IT); FINO, Luigi, I-20030 Bovisio Masciago (IT); CAPRIO, Michela, I-83100 Avellino (AV) (IT)
(74) Representative: Giannesi, Pier Giovanni
(86) International application number: PCT/EP2002/003942
(87) International publication number: WO 2002/083433

(56) References cited:
- EP-A- 0 827 978
- EP-A- 0 855 413
- EP-A- 0 889 091
- EP-A- 0 969 040
- EP-A- 1 077 223
- WO-A-00/24478

## Description

The present invention relates to a tyre for vehicle wheels, to a tread band and to a crosslinkable elastomeric composition.

More particularly, the present invention relates to a tyre for vehicle wheels comprising at least one component made of crosslinked elastomeric material including at least one copolymer of ethylene with at least one aliphatic α-olefin.

The present invention moreover relates to a tread band including a crosslinkable elastomeric composition comprising at least one copolymer of ethylene with at least one aliphatic α-olefin, and also to an elastomeric composition comprising at least one copolymer of ethylene with at least one aliphatic α-olefin.

In the rubber industry, in particular that of tyres for vehicle wheels, it is known practice to use elastomeric compositions which, in addition to having good static and dynamic mechanical properties, also have good tear resistance. In particular, the tear resistance is one of the most essential properties in the case of tyre tread bands.

Improved tear resistance may be obtained, for example, by increasing the hardness of the elastomeric compositions.

The hardness of the elastomeric compositions may be increased, for example, by increasing the crosslinking density of these compositions by using a larger amount of sulphur; or by using a larger amount of carbon black, or a finer and more structured carbon black.

However, excessive hardness may lead to a number of drawbacks such as, for example, a reduction in the elongation at break, which may cause, inter alia, the phenomenon known as "chipping" (pieces of rubber become detached from the tyre).

It is known that carbon black gives the crosslinked manufactured product pronounced hysteresis properties, that is to say an increase in the dissipated heat under dynamic conditions, which, as is known, in the case of a tyre, results in an increase in the rolling resistance of the tyre. In addition, carbon black causes an increase in the viscosity of the elastomeric composition and, consequently, has a negative impact on the processability and extrudability of this composition.

To overcome said drawbacks, the so-called "white" reinforcing fillers are usually used, in particular silica, in total or partial replacement for the carbon black. However, although the use of said reinforcing fillers leads to good tear resistance, it also entails a series of drawbacks essentially related to the poor affinity of these fillers with respect to the elastomers commonly used in the production of tyres. In particular, to obtain a good degree of dispersion of the silica in the polymer matrix, it is necessary to subject the elastomer blends to a prolonged thermomechanical blending action. To increase the affinity of the silica with the elastomer matrix, it is necessary to use suitable coupling agents, such as, for example, sulphur-containing organosilane products. However, the need to use such coupling agents places a limitation on the maximum temperature which may be reached during the blending and thermomechanical processing operations of the composition, to avoid the penalty of an irreversible thermal degradation of the coupling agent.

In the prior art, it has been suggested, for example, to introduce thermoplastic polymers into elastomeric compositions, in particular into the elastomeric compositions used for manufacturing tyre tread bands.

Patent US 4 675 349 describes a crosslinkable elastomeric composition comprising a small amount of a high-density crystalline linear polyethylene with an average molecular weight of between about 1 and 6 million, preferably of about 1.5 million, and a density of between 0.93 g/cm³ and 0.95 g/cm³. Said composition may be used to prepare tyre tread bands and is said to give tyres which have both low hysteresis and good roadholding, while at the same time keeping the hardness, abrasion and tear resistance properties unchanged.

Patent US 5 341 863 describes a tyre with a tread band consisting of a sulphur-crosslinkable elastomeric composition comprising (A) 100 parts by weight of at least one sulphur-vulcanizable diene elastomeric polymer, and (B) from about 5 to about 15 parts by weight of low-density polyethylene (LDPE) with a density of between about 0.91 g/cm³ and 0.918 g/cm³. The addition of said polyethylene is said to give an elastomeric composition with improved extrudability and tear resistance properties.

Patent US 6 028 143 describes an elastomeric composition comprising 100 parts by weight of an elastomeric matrix and from 2 to 75 parts by weight of a composition comprising from 0% to 80% of a polyethylene and at least 20% of a composite material comprising polyethylene and an elastomeric polymer linked beforehand to said polyethylene by means of a coupling agent, said elastomeric polymer being crosslinked with the elastomeric matrix. The use of said composite material is said to make it possible to improve the dispersion of the polyethylene in the elastomeric matrix and to increase the interaction between the polyethylene and said elastomeric matrix, thus making it possible to obtain an elastomeric composition with low hysteresis, good heat resistance and a high level of hardness, without having a negative impact on the tear resistance properties. The abovementioned elastomeric composition may be used to prepare tread bands.

Patent US 6 037 418 describes a reinforced elastomeric resin comprising an elastomeric polymer and a polyolefin, in which (1) the polyolefin is in the form of particles dispersed in the elastomeric polymer and having an average particle diameter of not more than 1 µm, and (2) the elastomeric polymer and the polyolefin are linked together by means of a silane coupling agent. Polyolefins that are useful for this purpose are: polyethylene, polypropylene, high-density polyethylene (HDPE), low-density polyethylene (LDPE), linear low-density polyethylene (LLDPE), etc. The abovementioned reinforced elastomeric resin is said to have a uniform modulus, a low density and excellent tensile strength, fatigue strength and abrasion resistance. Said elastomeric composition can be used to prepare tread bands.

In the Applicant's view, elastomeric compositions including thermoplastic polymers need to satisfy various requirements in order to make effectively advantageous to use them in the production of crosslinked manufactured products, and in particular tyres.

In particular, the Applicant believes that the presence of thermoplastic polymers in said elastomeric compositions needs to satisfy the following requirements:
- increase the tear resistance and consequently not impair, and if possible improve, the breaking properties of said compositions (stress at break and elongation at break);
- reduce the viscosity, thus making it possible to obtain elastomeric compositions with good processability and good extrudability;
- reduce the density, thus making it possible to obtain crosslinked manufactured products with a lower weight and, in the case of tyres for vehicle wheels, a lower rolling resistance;
- not increase the hardness;
- not have a negative impact on the remaining mechanical properties, both the static properties (in particular modulus values) and the dynamic properties (in particular the dynamic modulus and the tandelta).

The Applicant has now found that it is possible to obtain crosslinkable elastomeric compositions that are advantageously able to be used in the production of crosslinked manufactured products, in particular in the production of tyres, using a copolymer of ethylene with at least one aliphatic α-olefin having a molecular weight distribution (MWD) index of less than 5 and a melting enthalpy of not less than 30 J/g. Said ethylene copolymer is capable of satisfying the requirements mentioned above.

According to a first aspect, the present invention thus relates to a tyre for vehicle wheels, comprising at least one component made of crosslinked elastomeric material, in which said component includes an elastomeric composition comprising:
(a) at least one diene elastomeric polymer;
(b) at least one copolymer of ethylene with at least one aliphatic α-olefin, and optionally a polyene, said copolymer being characterized by a molecular weight distribution (MWD) index of less than 5, preferably between 1.5 and 3.5, and by a melting enthalpy (ΔHₘ) of not less than 30 J/g, preferably between 34 J/g and 130 J/g.

Said molecular weight distribution index is defined as the ratio between the weight-average molecular weight (M_{w}) and the number-average molecular weight (Mₙ) and may be determined, according to conventional techniques, by gel permeation chromatography (GPC).

Said melting enthalpy (ΔHₘ) may be determined by Differential Scanning Calorimetry and relates to the melting peaks detected in the temperature range from 0°C to 200°C.

According to one preferred embodiment, the present invention relates to a tyre for vehicle wheels, comprising:
- a carcass structure with at least one carcass ply shaped in a substantially toroidal configuration, the opposite lateral edges of which are associated with respective right-hand and left-hand bead wires, each bead wire being enclosed in a respective bead;
- a belt structure comprising at least one belt strip applied in a circumferentially external position relative to said carcass structure;
- a tread band superimposed circumferentially on said belt structure;
- a pair of side walls applied laterally on opposite sides relative to said carcass structure;
in which said component which includes an elastomeric composition comprising:
(a) at least one diene elastomeric polymer;
(b) at least one copolymer of ethylene with at least one aliphatic α-olefin, and optionally a polyene, said copolymer being characterized by a molecular weight distribution (MWD) index of less than 5, preferably between 1.5 and 3.5, and by a melting enthalpy (ΔHₘ) of not less than 30 J/g, preferably between 34 J/g and 130 J/g;
is the tread band.

According to a further aspect, the present invention relates to a tyre tread band for vehicle wheels, including a crosslinkable elastomeric composition comprising:
(a) at least one diene elastomeric polymer;
(b) at least one copolymer of ethylene with at least one aliphatic α-olefin, and optionally a polyene, said copolymer being characterized by a molecular weight distribution (MWD) index of less than 5, preferably between 1.5 and 3.5, and by a melting enthalpy (ΔHₘ) of not less than 30 J/g, preferably between 34 J/g and 130 J/g.

According to a further aspect, the present invention relates to an elastomeric composition comprising:
(a) at least one diene elastomeric polymer;
(b) at least one copolymer of ethylene with at least one aliphatic α-olefin, and optionally a polyene, said copolymer being characterized by a molecular weight distribution (MWD) index of less than 5, preferably between 1.5 and 3.5, and by a melting enthalpy (ΔHₘ) of not less than 30 J/g, preferably between 34 J/g and 130 J/g.

According to a further aspect, the present invention relates to a crosslinked elastomeric manufactured product obtained by crosslinking an elastomeric composition comprising:
(a) at least one diene elastomeric polymer;
(b) at least one copolymer of ethylene with at least one aliphatic α-olefin, and optionally a polyene, said copolymer being characterized by a molecular weight distribution (MWD) index of less than 5, preferably between 1.5 and 3.5, and by a melting enthalpy (ΔHₘ) of not less than 30 J/g, preferably between 34 J/g and 130 J/g.

According to one preferred embodiment, said copolymer of ethylene with at least one aliphatic α-olefin (b) is present in the elastomeric composition in an amount of between 0.1 phr and 100 phr, preferably between 3 phr and 50 phr, even more preferably between 5 phr and 20 phr.

For the purposes of the present description and of the claims, the term "phr" means the parts by weight of a given component of the elastomeric composition per 100 parts by weight of elastomeric base.

According to one preferred embodiment, the diene elastomeric polymer (a) which may be used in the present invention may be chosen from those commonly used in sulphur-crosslinkable elastomeric compositions, that are particularly suitable for producing tyres, that is to say from elastomeric polymers or copolymers with an unsaturated chain having a glass transition temperature (T_{g}) generally below 20°C, preferably between 0°C and -90°C. These polymers or copolymers may be of natural origin or may be obtained by solution polymerization, emulsion polymerization or gas-phase polymerization of one or more conjugated diolefins, optionally blended with at least one comonomer chosen from monovinylarenes and/or polar comonomers in an amount of not more than 60% by weight.
The conjugated diolefins generally contain from 4 to 12, preferably from 4 to 8 carbon atoms, and may be chosen, for example, from the group comprising: 1,3-butadiene, isoprene, 2,3-dimethyl-1,3-butadiene, 1,3-pentadiene, 1,3-hexadiene, 3-butyl-1,3-octadiene, 2-phenyl-1,3-butadiene, or mixtures thereof. 1,3-butadiene and isoprene are particularly preferred.

Monovinylarenes which may optionally be used as comonomers generally contain from 8 to 20, preferably from 8 to 12 carbon atoms, and may be chosen, for example, from: styrene; 1-vinylnaphthalene; 2-vinylnaphthalene; various alkyl, cycloalkyl, aryl, alkylaryl or arylalkyl derivatives of styrene such as, for example, α-methylstyrene, 3-methylstyrene, 4-propylstyrene, 4-cyclohexylstyrene, 4-dodecylstyrene, 2-ethyl-4-benzylstyrene, 4-p-tolylstyrene, 4-(4-phenylbutyl)styrene, or mixtures thereof. Styrene is particularly preferred.

Polar comonomers which may optionally be used may be chosen, for example, from: vinylpyridine, vinylquinoline, acrylic acid and alkylacrylic acid esters, nitriles, or mixtures thereof, such as, for example, methyl acrylate, ethyl acrylate, methyl methacrylate, ethyl methacrylate, acrylonitrile, or mixtures thereof.

Preferably, the diene elastomeric polymer (a) which may be used in the present invention may be chosen, for example, from: cis-1,4-polyisoprene (natural or synthetic, preferably natural rubber), 3,4-polyisoprene, polybutadiene (in particular polybutadiene with a high 1,4-cis content), optionally halogenated isoprene/isobutene copolymers, 1,3-butadiene/acrylonitrile copolymers, styrene/1,3-butadiene copolymers, styrene/isoprene/1,3-butadiene copolymers, styrene/1,3-butadiene/acrylonitrile copolymers, or mixtures thereof.

The elastomeric composition according to the present invention may optionally comprise at least one elastomeric polymer of one or more monoolefins with an olefinic comonomer or derivatives thereof (c), said elastomeric polymer being characterized by a melting enthalpy (ΔHₘ) of less than 15 J/g. The monoolefins may be chosen from: ethylene and α-olefins generally containing from 3 to 12 carbon atoms, such as, for example, propylene, 1-butene, 1-pentene, 1-hexene, 1-octene, or mixtures thereof. The following are preferred: copolymers between ethylene and an α-olefin, optionally with a diene; isobutene homopolymers or copolymers thereof with small amounts of a diene, which are optionally at least partially halogenated. The diene optionally present generally contains from 4 to 20 carbon atoms and is preferably chosen from: 1,3-butadiene, isoprene, 1,4-hexadiene, 1,4-cyclohexadiene, 5-ethylidene-2-norbornene, 5-methylene-2-norbornene, vinylnorbornene, or mixtures thereof. Among these, the following are particularly preferred: ethylene/propylene copolymers (EPR) or ethylene/propylene/diene copolymers (EPDM); polyisobutene; butyl rubbers; halobutyl rubbers, in particular chlorobutyl or bromobutyl rubbers; or mixtures thereof.

A diene elastomeric polymer (a) or an elastomeric polymer (c) functionalized by reaction with suitable terminating agents or coupling agents may also be used. In particular, the diene elastomeric polymers obtained by anionic polymerization in the presence of an organometallic initiator (in particular an organolithium initiator) may be functionalized by reacting the residual organometallic groups derived from the initiator with suitable terminating agents or coupling agents such as, for example, imines, carbodiimides, alkyltin halides, substituted benzophenones, alkoxysilanes or aryloxysilanes (see, for example, European patent EP 451 604, or patents US 4 742 124 and US 4 550 142).
With reference to the copolymer of ethylene with at least one aliphatic α-olefin (b), the term "aliphatic α-olefin" generally means an olefin of formula CH₂=CH-R, in which R represents a linear or branched alkyl group containing from 1 to 12 carbon atoms. Preferably, the aliphatic α-olefin is chosen from propylene, 1-butene, isobutylene, 1-pentene, 4-methyl-1-pentene, 1-hexene, 1-octene, 1-dodecene, or mixtures thereof. 1-octene is particularly preferred.

With reference to the copolymer of ethylene with at least one aliphatic α-olefin (b), the term "polyene" generally means a conjugated or non-conjugated diene, triene or tetraene. When a diene comonomer is present, this comonomer generally contains from 4 to 20 carbon atoms and is preferably chosen from: linear conjugated or non-conjugated diolefins such as, for example, 1,3-butadiene, 1,4-hexadiene, 1,6-octadiene, and the like; monocyclic or polycyclic dienes such as, for example, 1,4-cyclohexadiene, 5-ethylidene-2-norbornene, 5-methylene-2-norbornene, vinylnorbornene, or mixtures thereof. When a triene or tetraene comonomer is present, this comonomer generally contains from 9 to 30 carbon atoms and is preferably chosen from trienes or tetraenes containing a vinyl group in the molecule or a 5-norbornen-2-yl group in the molecule. Specific examples of triene or tetraene comonomers which may be used in the present invention are: 6,10-dimethyl-1,5,9-undecatriene, 5,9-dimethyl-1,4,8-decatriene, 6,9-dimethyl-1,5,8-decatriene, 6,8,9-trimethyl-1,6,8-decatriene, 6,10,14-trimethyl-1,5,9,13-pentadecatetraene, or mixtures thereof. Preferably, the polyene is a diene.

According to another preferred embodiment, said copolymer of ethylene with at least one aliphatic α-olefin (b) is characterized by:
- a density of between 0.86 g/cm³ and 0.93 g/cm³, preferably between 0.86 g/cm³ and 0.89 g/cm³;
- a Melt Flow Index (MFI), measured according to ASTM standard D1238-00, of between 0.1 g/10 min and 35 g/10 min, preferably between 0.5 g/10 min and 20 g/10 min;
- a melting point (Tₘ) of not less than 30°C, preferably between 50°C and 120°C, even more preferably between 55°C and 110°C.

The copolymer of ethylene with at least one aliphatic α-olefin (b) generally has the following composition: 50 mol%-98 mol%, preferably 60 mol%-93 mol%, of ethylene; 2 mol%-50 mol%, preferably 7 mol%-40 mol%, of an aliphatic α-olefin; 0 mol%-5 mol%, preferably 0 mol%-2 mol%, of a polyene.

According to a further preferred embodiment, said copolymer of ethylene with at least one aliphatic α-olefin (b) is characterized by a high regioregularity in the sequence of monomer units. In particular, said copolymer has an amount of -CH₂- groups in -(CH₂)ₙ- sequences, where n is an even integer, generally of less than 5 mol%, preferably less than 3 mol%, even more preferably less than 1 mol%, relative to the total amount of -CH₂- groups. The amount of -(CH₂)ₙ- sequences may be determined according to conventional techniques, by ¹³C-NMR analysis.

According to a further preferred embodiment, said copolymer of ethylene with at least one aliphatic α-olefin (b) is characterized by a composition distribution index of greater than 45%, said index being defined as the weight percentage of copolymer molecules having an α-olefin content within to 50% of the average total molar content of α-olefin.

The composition distribution index gives a measure of the distribution of the aliphatic α-olefin among the copolymer molecules, and may be determined by means of Temperature Rising Elution Fractionation Techniques, as described, for example, in patent US 5 008 204, or by Wild et al. in J. Poly. Sci. Poly, Phys. Ed., Vol. 20, p. 441 (1982).

The copolymer of ethylene with at least one aliphatic α-olefin (b) may be obtained by copolymerization of ethylene with an aliphatic α-olefin, in the presence of a single-site catalyst such as, for example, a metallocene catalyst or of a so-called "Constrained Geometry Catalyst".

Metallocene catalysts which may be used in the polymerization of olefins are, for example, coordination complexes between a transition metal, usually from group IV, in particular titanium, zirconium or hafnium, and two optionally substituted cyclopentadienyl ligands, which are used in combination with a co-catalyst, for example an aluminoxane, preferably methylaluminoxane, or a boron compound (see, for example, Adv. Organomet. Chem, Vol. 18, p. 99, (1980); Adv. Organomet. Chem, Vol. 32, p. 325, (1991); J.M.S. - Rev. Macromol. Chem. Phys., Vol. C34(3), pp. 439-514, (1994); J. Organometallic Chemistry, Vol. 479, pp. 1-29, (1994); Angew. Chem. Int., Ed. Engl., Vol. 34, p. 1143, (1995); Prog. Polym. Sci., Vol. 20, p. 459 (1995); Adv. Polym. Sci., Vol. 127, p. 144, (1997); patent US 5 229 478, or patent applications WO 93/19107, EP 35 342, EP 129 368, EP 277 003, EP 277 004, EP 632 065).

Catalysts so-called "Constrained Geometry Catalyst" which may be used in the polymerization of olefins are, for example, coordination complexes between a metal, usually from groups 3-10 or from the Lanthanide series, and a single, optionally substituted cyclopentadienyl ligand, which are used in combination with a co-catalyst, for example an aluminoxane, preferably methylaluminoxane, or a boron compound (see, for example, Organometallics, Vol. 16, p. 3649, (1997); J. Am. Chem. Soc., Vol. 118, p. 13021, (1996); J. Am. Chem. Soc., Vol. 118, p. 12451, (1996) ; J. Organometallic Chemistry, Vol. 482, p. 169, (1994); J. Am. Chem. Soc., Vol. 116, p. 4623, (1994); Organometallics, Vol. 9, p. 867, (1990); patents US 5 096 867, US 5 414 040, or patent applications WO 92/00333, WO 97/15583, WO 01/12708, EP 416 815, EP 418 044, EP 420 436, EP 514 828.

The synthesis of the copolymers of ethylene with at least one aliphatic α-olefin (b) in the presence of metallocene catalysts is described, for example, in patent application EP 206 794, or in Metallocene-based polyolefins, Vol. 1, Wiley series in Polymer Science, p. 309, (1999).

The synthesis of copolymers of ethylene with at least one aliphatic α-olefin (b) in the presence of catalysts so-called "Constrained Geometry Catalyst" is described, for example, in Macromol. Chem. Rapid. Commun., Vol. 20, p. 214-218, (1999); Macromolecules, Vol. 31, p. 4724 (1998); Macromolecules Chem. Phys., Vol. 197, p. 4237 (1996); or in patent application WO 00/26268; or in patent US 5 414 040.

The copolymer of ethylene with at least one aliphatic α-olefin (b) may optionally contain functional groups chosen from: carboxylic groups, anhydride groups, ester groups, silane groups, epoxide groups. The amount of functional groups present in the copolymer is generally between 0.05 and 50 parts by weight, preferably between 0.1 and 10 parts by weight, relative to 100 parts by weight of copolymer of ethylene with at least one aliphatic α-olefin (b).

The functional groups may be introduced during the production of the copolymer of ethylene with at least one aliphatic α-olefin (b), by copolymerization with corresponding functionalized monomers containing at least one ethylenic unsaturation, or by subsequent modification of the copolymer of ethylene with at least one aliphatic α-olefin (b) by grafting said functionalized monomers in the presence of a free-radical initiator (in particular an organic peroxide).

Alternatively, it is possible to introduce the functional groups by reacting preexisting groups on the copolymer of ethylene with at least one aliphatic α-olefin (b) with a suitable reagent, for example by an epoxidation reaction of a diene polymer containing double bonds along the main chain and/or as side groups, with a peracid (for example m-chloroperbenzoic acid or peracetic acid) or with hydrogen peroxide in the presence of a carboxylic acid or a derivative thereof.

Functionalized monomers which may be used, for example, are: silanes containing at least one ethylenic unsaturation; epoxides containing at least one ethylenic unsaturation; monocarboxylic or, preferably, dicarboxylic acids containing at least one ethylenic unsaturation, or derivatives thereof, in particular anhydrides or esters.

Examples of silanes containing at least one ethylenic unsaturation are: γ-methacryloxypropyltrimethoxysilane, allyltrimethoxysilane, allyltriethoxysilane, allylmethyldimethoxysilane, allylmethyldiethoxysilane, vinyltris(2-methoxyethoxy)silane, vinyltrimethoxysilane, vinylmethyldimethoxysilane, vinyltriethoxysilane, or mixtures thereof.

Examples of epoxides containing at least one ethylenic unsaturation are: glycidyl acrylate, glycidyl methacrylate, monoglycidyl ester of itaconic acid, glycidyl ester of maleic acid, vinyl glycidyl ether, allyl glycidyl ether, or mixtures thereof.

Examples of monocarboxylic or dicarboxylic acids containing at least one ethylenic unsaturation, or derivatives thereof, are: maleic acid, maleic anhydride, fumaric acid, citraconic acid, itaconic acid, acrylic acid, methacrylic acid, or mixtures thereof, and anhydrides or esters derived therefrom, or mixtures thereof. Maleic anhydride is particularly preferred.

Examples of copolymers of ethylene with at least one aliphatic α-olefin (b) which may be used in the present invention and which are currently commercially available are the products Engage@ from DuPont-Dow Elastomers and Exact@ from Exxon Chemical.

At least one reinforcing filler may advantageously be added to the elastomeric composition according to the present invention, in an amount generally of between 0.1 phr and 120 phr, preferably between 20 phr and 90 phr. The reinforcing filler may be chosen from those commonly used for crosslinked manufactured products, in particular for tyres, such as, for example, carbon black, silica, alumina, aluminosilicates, calcium carbonate, kaolin, or mixtures thereof.

The types of carbon black which may be used according to the present invention may be chosen from those conventionally used in the production of tyres, generally having a surface area of not less than 20 m²/g (determined by CTAB absorption as described in ISO standard 6810).

The silica which may be used according to the present invention may generally be a pyrogenic silica or, preferably, a precipitated silica, with a BET surface area (measured according to ISO standard 5794/1) of between 50 m²/g and 500 m²/g, preferably between 70 m²/g and 200 m²/g.

When a reinforcing filler comprising silica is present, the elastomeric composition may advantageously incorporate a coupling agent capable of interacting with the silica and of linking it to the elastomeric base during the vulcanization.

Coupling agents that are preferably used are those based on silane which may be identified, for example, by the following structural formula (II):

(R)₃Si-CₙH₂ₙ-X (II)

in which the groups R, which may be identical or different, are chosen from: alkyl, alkoxy or aryloxy groups or from halogen atoms, on condition that at least one of the groups R is an alkoxy or aryloxy group; n is an integer between 1 and 6 inclusive; X is a group chosen from: nitroso, mercapto, amino, epoxide, vinyl, imide, chloro, -(S)ₘCₙH₂ₙ-Si-(R)₃ in which m and n are integers between 1 and 6 inclusive and the groups R are defined as above.

Among the coupling agents that are particularly preferred are bis(3-triethoxysilylpropyl) tetrasulphide and bis(3-triethoxysilylpropyl) disulphide. Said coupling agents may be used as such or as a suitable mixture with an inert filler (for example carbon black) so as to facilitate their incorporation into the elastomeric composition.

The elastomeric composition according to the present invention may be vulcanized according to known techniques, in particular with sulphur-based vulcanizing systems commonly used for diene elastomeric polymers. To this end, in the composition, after a first stage of thermomechanical processing, a sulphur-based vulcanizing agent is incorporated together with vulcanization accelerators and activators. In this second processing stage, the temperature is generally kept below 120°C and preferably below 100°C, so as to avoid any unwanted pre-cross-linking phenomena.

The vulcanizing agent most advantageously used is sulphur, or molecules containing sulphur (sulphur donors), with accelerators and activators known to those skilled in the art.

Activators that are particularly effective are zinc compounds, and in particular ZnO, ZnCO₃, zinc salts of saturated or unsaturated fatty acids containing from 8 to 18 carbon atoms, such as, for example, zinc stearate, which are preferably formed in situ in the elastomeric composition from ZnO and fatty acid, and also BiO, PbO, Pb₃O₄, PbO₂, or mixtures thereof.

Accelerators that are commonly used may be chosen from: dithiocarbamates, guanidine, thiourea, thiazoles, sulphenamides, thiurams, amines, xanthates, or mixtures thereof.

The elastomeric composition according to the present invention may comprise other commonly used additives chosen on the basis of the specific application for which the composition is intended. For example, the following may be added to said composition: antioxidants, anti-ageing agents, plasticizers, adhesives, anti-ozone agents, modifying resins, fibres (for example Kevlar® pulp), or mixtures thereof.

In particular, for the purpose of further improving the processability, a plasticizer generally chosen from mineral oils, vegetable oils, synthetic oils, or mixtures thereof, such as, for example, aromatic oil, naphthenic oil, phthalates, soybean oil, or mixtures thereof, may be added to the elastomeric composition according to the present invention. The amount of plasticizer generally ranges between 2 phr and 100 phr, preferably between 5 phr and 50 phr.

The elastomeric composition according to the present invention may be prepared by mixing together the polymeric components with the reinforcing filler optionally present and with the other additives according to techniques known in the art. The mixing may be carried out, for example, using an open mixer of open-mill type, or an internal mixer of the type with tangential rotors (Banbury) or with interlocking rotors (Intermix), or in continuous mixers of Ko-Kneader type (Buss) or of co-rotating or counter-rotating twin-screw type.

The copolymer of ethylene with at least one aliphatic α-olefin (b) may be used in the form of powder, granules or pellets.

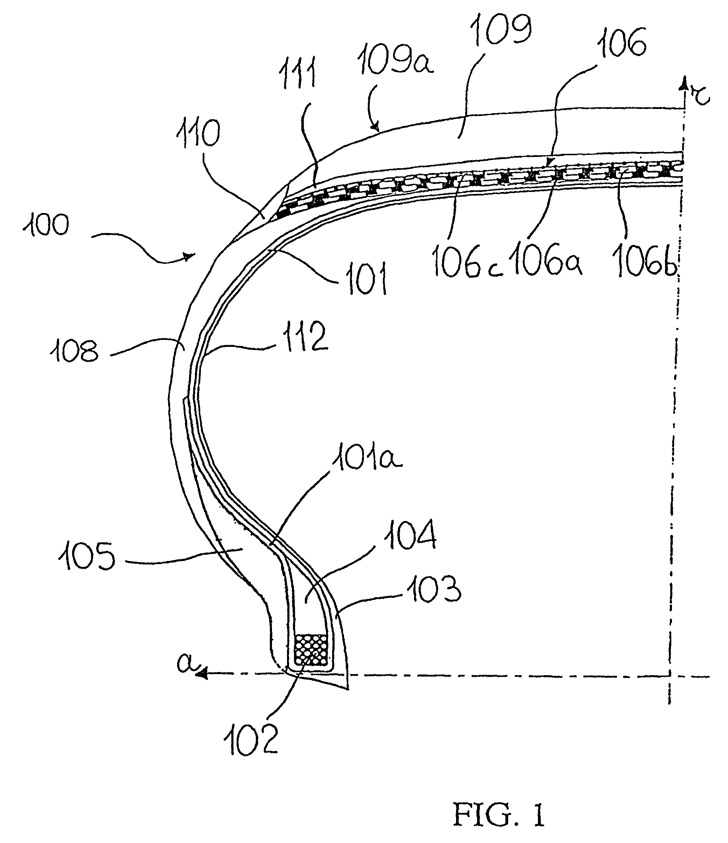

The present invention will now be illustrated in further detail by means of a number of illustrative embodiments, with reference to the attached Fig. 1, which is a view in cross section of a portion of a tyre made according to the invention.

"a" indicates an axial direction and "r" indicates a radial direction. For simplicity, Fig. 1 shows only a portion of the tyre, the remaining portion not represented being identical and symmetrically arranged with respect to the radial direction "r".

The tyre (100) comprises at least one carcass ply (101), the opposite lateral edges of which are associated with respective bead wires (102). The association between the carcass ply (101) and the bead wires (102) is achieved here by folding back the opposite lateral edges of the carcass ply (101) around the bead wires (102) so as to form the so-called carcass back-folds (101a) as shown in Fig. 1.

Alternatively, the conventional bead wires (102) can be replaced with a pair of circumferentially inextensible annular inserts formed from elongate components arranged in concentric coils (not represented in Fig. 1) (see, for example, European patent applications EP 928 680 and EP 928 702). In this case, the carcass ply (101) is not back-folded around said annular inserts, the coupling being provided by a second carcass ply (not represented in Fig. 1) applied externally over the first.

The carcass ply (101) generally consists of a plurality of reinforcing cords arranged parallel to each other and at least partially coated with a layer of elastomeric compound. These reinforcing cords are usually made of textile fibres, for example rayon, nylon or polyethylene terephthalate, or of steel wires stranded together, coated with a metal alloy (for example copper/zinc, zinc/manganese, zinc/molybdenum/cobalt alloys and the like).

The rubberized carcass ply (101) is usually of radial type, i.e. it incorporates reinforcing cords arranged in a substantially perpendicular direction relative to a circumferential direction. Each bead wire (102) is enclosed in a bead (103), defined along an inner circumferential edge of the tyre (100), with which the tyre engages on a rim (not represented in Fig. 1) forming part of a vehicle wheel. The space defined by each carcass back-fold (101a) contains a bead filler (104) in which the bead wires (102) are embedded. An antiabrasive strip (105) is usually placed in an axially external position relative to the carcass back-fold (101a).

A belt structure (106) is applied along the circumference of the rubberized carcass ply (101). In the particular embodiment in Fig. 1, the belt structure (106) comprises two belt strips (106a, 106b) which incorporate a plurality of reinforcing cords, typically metal cords, which are parallel to each other in each strip and intersecting with respect to the adjacent strip, oriented so as to form a predetermined angle relative to a circumferential direction. On the radially outermost belt strip (106b) may optionally be applied at least one zero-degree reinforcing layer (106c), commonly known as a "0° belt", which generally incorporates a plurality of reinforcing cords, typically textile cords, arranged at an angle of a few degrees relative to a circumferential direction, and coated and welded together by means of an elastomeric material.

A side wall (108) is also applied externally onto the rubberized carcass ply (101), this side wall extending, in an axially external position, from the bead (103) to the end of the belt structure (106).

A tread band (109), whose lateral edges are connected to the side walls (108), is applied circumferentially in a position radially external to the belt structure (106). Externally, the tread band (109), which can be produced according to the present invention, has a rolling surface (109a) designed to come into contact with the ground. Circumferential grooves which are connected by transverse notches (not represented in Fig. 1) so as to define a plurality of blocks of various shapes and sizes distributed over the rolling surface (109a) are generally made in this surface (109a), which is represented for simplicity in Fig. 1 as being smooth.

A strip made of elastomeric material (110), commonly known as a "mini-side wall", may optionally be present in the connecting zone between the side walls (108) and the tread band (109), this mini-side wall generally being obtained by co-extrusion with the tread band and allowing an improvement in the mechanical interaction between the tread band (109) and the side walls (108). Alternatively, the end portion of the side wall (108) directly covers the lateral edge of the tread band (109). A underlayer which forms, with the tread band (109), a structure commonly known as a "cap and base" (not represented in Fig. 1) may optionally be placed between the belt structure (106) and the tread band (109).

A layer of elastomeric material (111) which serves as an "attachment sheet", i.e. a sheet capable of providing the connection between the tread band (109) and the belt structure (106), may be placed between the tread band (109) and the belt structure (106).

In the case of tubeless tyres, a rubber layer (112) generally known as a "liner", which provides the necessary impermeability to the inflation air of the tyre, may also be provided in a radially internal position relative to the rubberized carcass ply (101).

The process for producing the tyre according to the present invention can be carried out according to techniques and using apparatus that are known in the art, as described, for example, in patents EP 199 064, US 4 872 822, US 4 768 937, said process including at least one stage of manufacturing the green tyre and at least one stage of vulcanizing this tyre.

More particularly, the process for producing the tyre comprises the stages of preparing, beforehand and separately from each other, a series of semi-finished products corresponding to the various parts of the tyre (carcass plies, belt structure, bead wires, fillers, side walls and tread band) which are then combined together using a suitable manufacturing machine. Next, the subsequent vulcanization stage welds the abovementioned semi-finished products together to give a monolithic block, i.e. the finished tyre.

Naturally, the stage of preparing the abovementioned semi-finished products will be preceded by a stage of preparing and moulding the various blends, of which said semi-finished products are made, according to conventional techniques.

The green tyre thus obtained is then passed to the subsequent stages of moulding and vulcanization. To this end, a vulcanization mould is used which is designed to receive the tyre being processed inside a moulding cavity having walls which are countermoulded to define the outer surface of the tyre when the vulcanization is complete.

Alternative processes for producing a tyre or parts of a tyre without using semi-finished products are disclosed, for example, in the abovementioned patent applications EP 928 680 and EP 928 702.

The green tyre can be moulded by introducing a pressurized fluid into the space defined by the inner surface of the tyre, so as to press the outer surface of the green tyre against the walls of the moulding cavity. In one of the moulding methods widely practised, a vulcanization chamber made of elastomeric material, filled with steam and/or another fluid under pressure, is inflated inside the tyre closed inside the moulding cavity. In this way, the green tyre is pushed against the inner walls of the moulding cavity, thus obtaining the desired moulding. Alternatively, the. moulding can be carried out without an inflatable vulcanization chamber, by providing inside the tyre a toroidal metal support shaped according to the configuration of the inner surface of the tyre to be obtained as decribed, for example, in patent EP 242,840. The difference in coefficient of thermal expansion between the toroidal metal support and the crude elastomeric material is exploited to achieve an adequate moulding pressure.

At this point, the stage of vulcanizing the crude elastomeric material present in the tyre is carried out. To this end, the outer wall of the vulcanization mould is placed in contact with a heating fluid (generally steam) such that the outer wall reaches a maximum temperature generally of between 100°C and 230°C. Simultaneously, the inner surface of the tyre is heated to the vulcanization temperature using the same pressurized fluid used to press the tyre against the walls of the moulding cavity, heated to a maximum temperature of between 100°C and 250°C. The time required to obtain a satisfactory degree of vulcanization throughout the mass of the elastomeric material can vary in general between 3 min and 90 min and depends mainly on the dimensions of the tyre. When the vulcanization is complete, the tyre is removed from the vulcanization mould.

Although the present invention has been illustrated specifically in relation to a tyre, other crosslinked elastomeric manufactured products that can be produced according to the invention may be, for example, conveyor belts, driving belts or flexible tubes.

The present invention will be further illustrated below by means of a number of preparation examples, which are given for purely indicative purposes and without any limitation of this invention.

### EXAMPLES 1-4

### Preparation of the elastomeric compositions

The elastomeric compositions given in Table 1 were prepared as follows (the amounts of the various components are given in phr).

All the ingredients, except for the sulphur, the accelerator and the retardant, were mixed together in an internal mixer (model Pomini PL 1.6) for about 5 min (1st Stage). As soon as the temperature reached 145±5°C, the elastomeric composition was discharged. The sulphur, the accelerator and the retardant were then added and mixing was carried out in an open roll mixer (2nd Stage).

**TABLE 1**

| EXAMPLE | 1 (*) | 2 | 3 | 4 (*) |
|---|---|---|---|---|
| 1st STAGE | | | | |
| NR | 80 | 80 | 80 | 80 |
| BR | 20 | 20 | 20 | 20 |
| Carbon black | 45 | 45 | 40 | 45 |
| Silica | 15 | 15 | 15 | 15 |
| Engage® 8200 | - | 5 | 5 | - |
| Riblene® MR10 | - | - | - | 5 |
| Stearic acid | 2 | 2 | 2 | 2 |
| Zinc oxide | 3.5 | 3.5 | 3.5 | 3.5 |
| Silane | 1.5 | 1.5 | 1.5 | 1.5 |
| Antioxidant | 2 | 2 | 2 | 2 |
| Microcrystalline wax | 1 | 1 | 1 | 1 |

| 2nd STAGE | | | | |
|---|---|---|---|---|
| TBBS | 1.7 | 1.7 | 1.7 | 1.7 |
| PVI | 0.2 | 0.2 | 0.2 | 0.2 |
| Sulphur | 1.2 | 1.2 | 1.2 | 1.2 |

| | | | | |
|---|---|---|---|---|
| (*): comparative NR: natural rubber; BR: cis-1,4-polybutadiene (CIS 132 - B.S.L.); Carbon black: N115 (Vulcan@ 9 - Cabot); Silica: precipitated silica (Zeosil® 1165 MP - Rhone-Poulenc); Engage® 8200: product from Du Pont-Dow Elastomers, having the following properties: ethylene/1-octene weight ratio = 76/24; d = 0.870 g/cm³; MFI = 0.5 g/10'; ΔHₘ = 24 J/g; Tₘ = 60°C; Riblene® MR10: low-density polyethylene from Polimeri Europa; TESPT: bis(3-triethoxysilylpropyl) tetrasulphide (X50S comprising 50% carbon black and 50% silane, from Degussa - the amount reported is relative to the amount of silane); Antioxidant: phenyl-p-phenylenediamine; TBBS (accelerator): N-t-butyl-2-benzothiazylsulphenamide (Vulkacit® NZ - Bayer); PVI (retardant): N-cyclohexylthiophthalimide. | | | | |

The Mooney viscosity ML(1+4) at 100°C was measured, according to ISO standard 289/1, on the non-crosslinked compositions obtained as described above. The results obtained are given in Table 2.

The following were measured on samples of the abovementioned elastomeric compositions crosslinked at 151°C for 30 min:
- the density at 23°C according to ISO standard 2781;
- the static mechanical properties according to ISO standard 37;
- the hardness in IRHD degrees at 23°C according to ISO standard 48.

The results obtained are given in Table 2.

Table 2 also shows the dynamic mechanical properties, measured using an Instron dynamic device in the traction-compression mode according to the following methods. A test piece of the crosslinked material having a cylindrical form (length = 25 mm; diameter = 14 mm) compression-preloaded up to 10% longitudinal deformation with respect to the initial length, and kept at the prefixed temperature (23°C or 70°C) for the whole duration of the test, was submitted to a dynamic sinusoidal strain with an amplitude ±3.33% with respect to the length under pre-load, with a frequency of 100 Hz. The dynamic mechanical properties are expressed in terms of dynamic elastic modulus (E') and tandelta (loss factor) values. As is known, the tandelta value is calculated as a ratio between the viscous modulus (E") and the elastic modulus (E'), both of them being determined with the above dynamic measurements.

Finally, the tear resistance values were measured according to ISO standard 34 and are also given in Table 2 expressed as indices, the results obtained using the reference composition of Example 1 being set at 100.

**TABLE 2**

| EXAMPLE | 1 (*) | 2 | 3 | 4 (*) |
|---|---|---|---|---|
| Viscosity ML (1+4) | 66 | 59 | 56 | 64 |
| Density (g/cm³) | 1.138 | 1.129 | 1.117 | 1.133 |

| STATIC MECHANICAL PROPERTIES | | | | |
|---|---|---|---|---|
| 50% modulus (MPa) | 1.42 | 1.42 | 1.27 | 1.50 |
| 100% modulus (MPa) | 2.54 | 2.48 | 2.16 | 2.61 |
| Stress at break (MPa) | 22.62 | 22.80 | 21.94 | 22.11 |
| Elongation at break (%) | 479 | 505 | 514 | 496 |

| DYNAMIC MECHANICAL PROPERTIES | | | | |
|---|---|---|---|---|
| E' (23°C) (MPa) | 6.06 | 6.30 | 5.70 | 7.10 |
| E' (70°C) (MPa) | 4.70 | 4.60 | 4.20 | 5.20 |
| Tan delta (23°C) | 0.192 | 0.202 | 0.183 | 0.205 |
| Tan delta (70°C) | 0.125 | 0.135 | 0.121 | 0.138 |
| IRHD hardness at 23°C | 70 | 70 | 68 | 73 |
| Tear resistance (index) | 100 | 109 | 110 | 110 |

| | | | | |
|---|---|---|---|---|
| (*): comparative. | | | | |

The results given in Table 2 show that the crosslinked manufactured products obtained from the elastomeric compositions comprising the ethylene/1-octene copolymer according to the present invention (Examples 2 and 3) show good tear resistance. Said result is obtained without causing excessive hardness of the elastomeric compositions and without significantly increasing their hysteresis properties.

In addition, the results given in Table 2 also show that the elastomeric compositions according to the present invention not only have lower viscosity values and, consequently, show better processability and extrudability, but also have lower density values, which, in the case of tyres for vehicle wheels, make it possible to obtain lighter tyres which consequently have a lower rolling resistance.

## Claims

1. Tyre for vehicle wheels, comprising at least one component made of crosslinked elastomeric material, in which said component includes an elastomeric composition comprising:
a) at least one diene elastomeric polymer;
b) at least one copolymer of ethylene with at least one aliphatic α-olefin, and optionally a polyene, said copolymer being **characterized by** a molecular weight distribution (MWD) index of less than 5 and by a melting enthalpy (ΔHₘ) of not less than 30 J/g.

2. Tyre according to Claim 1, comprising:
- a carcass structure with at least one carcass ply shaped in a substantially toroidal configuration, the opposite lateral edges of which are associated with respective right-hand and left-hand bead wires, each bead wire being enclosed in a respective bead;
- a belt structure comprising at least one belt strip applied in a circumferentially external position relative to said carcass structure;
- a tread band superimposed circumferentially on said belt structure;
- a pair of side walls applied laterally on opposite sides relative to said carcass structure;
in which said component which includes an elastomeric composition comprising:
(a) at least one diene elastomeric polymer;
(b) at least one copolymer of ethylene with at least one aliphatic α-olefin, and optionally a polyene, said copolymer being **characterized by** a molecular weight distribution (MWD) index of less than 5 and by a melting enthalpy (ΔHₘ) of not less than 30 J/g;
is the tread band.

3. Tyre according to Claim 1 or 2, in which the molecular weight distribution (MWD) index is between 1.5 and 3.5.

4. Tyre according to Claim 1 or 2, in which the melting enthalpy (ΔHₘ) is between 34 J/g and 130 J/g.

5. Tyre according to any one of the preceding claims, in which the copolymer of ethylene with at least one aliphatic α-olefin (b) is present in the elastomeric composition in an amount of between 0.1 phr and 100 phr.

6. Tyre according to Claim 5, in which the copolymer of ethylene with at least one aliphatic α-olefin (b) is present in the elastomeric composition in an amount of between 3 phr and 50 phr.

7. Tyre according to Claim 6, in which the copolymer of ethylene with at least one aliphatic α-olefin (b) is present in the elastomeric composition in an amount of between 5 phr and 20 phr.

8. Tyre according to any one of the preceding claims, in which, in the copolymer (b), the aliphatic α-olefin is an olefin of formula CH₂=CH-R, in which R represents a linear or branched alkyl group containing from 1 to 12 carbon atoms.

9. Tyre according to Claim 8, in which the aliphatic α-olefin is chosen from propylene, 1-butene, isobutylene, 1-pentene, 4-methyl-1-pentene, 1-hexene, 1-octene, 1-dodecene, or mixtures thereof.

10. Tyre according to Claim 9, in which the aliphatic α-olefin is 1-octene.

11. Tyre according to any one of the preceding claims, in which, in the copolymer (b), the polyene is a conjugated or non-conjugated diene, triene or tetraene.

12. Tyre according to Claim 11, in which the polyene is a diene.

13. Tyre according to any one of the preceding claims, in which the copolymer of ethylene with at least one aliphatic α-olefin (b) has a density of between 0.86 g/cm³ and 0.93 g/cm³.

14. Tyre according to any one of the preceding claims, in which the copolymer of ethylene with at least one aliphatic α-olefin (b) has a Melt Flow Index (MFI) of between 0.1 g/10 min and 35 g/10 min.

15. Tyre according to any one of the preceding claims, in which the copolymer of ethylene with at least one aliphatic α-olefin (b) has a melting point of not less than 30°C.

16. Tyre according to any one of the preceding claims, in which the copolymer of ethylene with at least one aliphatic α-olefin (b) has the following composition: 50 mol%-98 mol% of ethylene; 2 mol%-50 mol% of an aliphatic α-olefin; 0 mol%-5 mol% of a polyene.

17. Tyre according to any one of the preceding claims, in which the copolymer of ethylene with at least one aliphatic α-olefin (b) contains functional groups chosen from: carboxylic groups, anhydride groups, ester groups, silane groups, epoxide groups.

18. Tyre according to Claim 17, in which the functional groups are present in an amount of between 0.05 and 50 parts by weight relative to 100 parts by weight of copolymer of ethylene with at least one aliphatic α-olefin (b).

19. Tyre according to any one of the preceding claims, in which the diene elastomeric polymer (a) has a glass transition temperature (Tg) below 20°C.

20. Tyre according to Claim 19, in which the diene elastomeric polymer (a) is chosen from: cis-1,4-polyisoprene, 3,4-polyisoprene, polybutadiene, optionally halogenated isoprene/isobutene copolymers, 1,3-butadiene/acrylonitrile copolymers, styrene/1,3-butadiene copolymers, styrene/isoprene/1,3-butadiene copolymers, styrene/1,3-butadiene/acrylonitrile copolymers, or mixtures thereof.

21. Tyre according to Claim 20, in which the diene elastomeric polymer (a) is functionalized by reaction with suitable terminating agents or coupling agents.

22. Tyre according to any one of the preceding claims, in which the elastomeric composition comprises at least one elastomeric polymer of one or more monoolefins with an olefinic comonomer or derivatives thereof (c), said elastomeric polymer being **characterized by** a melting enthalpy (ΔHₘ) of less than 15 J/g.

23. Tyre according to Claim 22, in which the elastomeric polymer (c) is chosen from: ethylene/propylene copolymers (EPR) or ethylene/propylene/diene copolymers (EPDM); polyisobutene; butyl rubbers; halobutyl rubbers; or mixtures thereof.

24. Tyre according to Claim 23, in which the elastomeric polymer (c) is functionalized by reaction with suitable terminating agents or coupling agents.

25. Tyre according to any one of the preceding claims, in which at least one reinforcing filler is present, in an amount of between 0.1 phr and 120 phr, in the elastomeric composition.

26. Tyre according to Claim 25, in which the reinforcing filler is carbon black.

27. Tyre according to Claim 25, in which the reinforcing filler is silica.

28. Tyre according to Claim 27, in which the elastomeric composition comprises a silica coupling agent.

29. Tyre tread band for vehicle wheels, including a crosslinkable elastomeric composition comprising:
a) at least one diene elastomeric polymer;
b) at least one copolymer of ethylene with at least one aliphatic α-olefin, and optionally a polyene, said copolymer being **characterized by** a molecular weight distribution (MWD) index of less than 5 and by a melting enthalpy (ΔHₘ) of not less than 30 J/g.

30. Tread band according to Claim 29, in which the molecular weight distribution (MWD) index is between 1.5 and 3.5.

31. Tread band according to Claim 29, in which the melting enthalpy (ΔHₘ) is between 34 J/g and 130 J/g.

32. Tread band according to any one of Claims 29 to 31, in which the copolymer of ethylene with at least one aliphatic α-olefin (b) is defined in any one of Claims 5 to 18.

33. Tread band according to any one of Claims 29 to 32, in which the diene elastomeric polymer (a) is defined in any one of Claims 19 to 21.

34. Tread band according to any one of Claims 29 to 33, in which the elastomeric composition comprises at least one elastomeric polymer (c).

35. Tread band according to Claim 34, in which the elastomeric polymer (c) is defined in any one of Claims 22 to 24.

36. Tread band according to any one of Claims 29 to 35, in which at least one reinforcing filler is present, in an amount of between 0.1 phr and 120 phr, in the elastomeric composition.

37. Tread band according to Claim 36, in which the reinforcing filler is carbon black.

38. Tread band according to Claim 36, in which the reinforcing filler is silica.

39. Tread band according to Claim 38, in which the elastomeric composition comprises a silica coupling agent.

40. Elastomeric composition comprising:
a) at least one diene elastomeric polymer;
b) at least one copolymer of ethylene with at least one aliphatic α-olefin, and optionally a polyene, said copolymer being **characterized by** a molecular weight distribution (MWD) index of less than 5 and by a melting enthalpy (ΔHₘ) of not less than 30 J/g.

41. Elastomeric composition according to Claim 40, in which the molecular weight distribution (MWD) index is between 1.5 and 3.5.

42. Elastomeric composition according to Claim 40, in which the melting enthalpy (ΔHₘ) is between 34 J/g and 130 J/g.

43. Elastomeric composition according to any one of Claims 40 to 42, in which the copolymer of ethylene with at least one aliphatic α-olefin (b) is defined in any one of Claims 5 to 18.

44. Elastomeric composition according to any one of Claims 40 to 43, in which the diene elastomeric polymer (a) is defined in any one of Claims 19 to 21.

45. Elastomeric composition according to any one of Claims 40 to 44, in which the elastomeric composition comprises at least one elastomeric polymer (c).

46. Elastomeric composition according to Claim 45, in which the elastomeric polymer (c) is defined in any one of Claims 22 to 24.

47. Elastomeric composition according to any one of Claims 40 to 46, in which at least one reinforcing filler is present, in an amount of between 0.1 phr and 120 phr.

48. Elastomeric composition according to Claim 47, in which the reinforcing filler is carbon black.

49. Elastomeric composition according to Claim 48, in which the reinforcing filler is silica.

50. Elastomeric composition according to Claim 49, in which the elastomeric composition comprises a silica coupling agent.

51. Crosslinked elastomeric manufactured product obtained by crosslinking an elastomeric composition defined according to any one of Claims 40 to 50.

## Patentansprüche

1. Reifen für Kraftfahrzeugräder, der wenigstens ein aus einem vernetzten Elastomermaterial hergestelltes Element umfasst, das seinerseits ein Elastomergemisch umfasst, das
a) wenigstens ein Dienelastomerpolymer und
b) wenigstens ein Ethylencopolymer mit wenigstens einem aliphatischen α-Olefin und gegebenenfalls einem Polyen enthält, wobei das Copolymer durch einen Molekulargewichtsverteilungsindex (MGVI) von unter 5 und durch eine Schmelzenthalpie (ΔHₘ) von wenigstens 30 J/g gekennzeichnet ist.

2. Reifen nach Anspruch 1, der
- einen Karkassenaufbau mit wenigstens einer Karkassenschicht mit im Wesentlichen ringförmiger Konfiguration, deren gegenüberliegende seitlichen Kanten mit den entsprechenden rechten und linken Wulstdrähten verbunden sind, von denen jeder in den entsprechenden Wulst eingebettet ist,
- einen Gürtelaufbau, der wenigstens einen Gürtelstreifen umfasst, der außen am Umfang des Gürtelaufbaus aufgebracht ist,
- ein auf den Umfang des Gürtelaufbaus aufgebrachtes Laufflächenband und
- ein Paar von Seitenwänden umfasst, die seitlich auf den gegenüberliegenden Seiten, bezogen auf den Karkassenaufbau, aufgebracht sind,
wobei das Element, das ein Elastomergemisch umfasst, das
a) wenigstens ein Dienelastomerpolymer und
b) wenigstens ein Ethylencopolymer mit wenigstens einem aliphatischen α-Olefin und gegebenenfalls einem Polyen enthält, wobei das Copolymer durch einen Molekulargewichtsverteilungsindex (MGVI) von unter 5 und durch eine Schmelzenthalpie (ΔHₘ) von wenigstens 30 J/g gekennzeichnet ist, das Laufflächenband ist.

3. Reifen nach Anspruch 1 oder 2, bei dem der Molekulargewichtsverteilungsindex (MGVI) 1,5 bis 3,5 beträgt.

4. Reifen nach Anspruch 1 oder 2, bei dem die Schmelzenthalpie (ΔHₘ) 34 J/g bis 130 J/g beträgt.

5. Reifen nach einem der vorhergehenden Ansprüche, bei dem das Ethylen-Copolymer mit wenigstens einem aliphatischen α-Olefin b) im Elastomergemisch in einer Menge von 0,1 bis 100 Teilen pro 100 Teile Kautschuk vorliegt.

6. Reifen nach Anspruch 5, bei dem das Ethylen-Copolymer mit wenigstens einem aliphatischen α-Olefin (b) im Elastomergemisch in einer Menge von 3 bis 50 Teilen pro 100 Teile Kautschuk vorliegt.

7. Reifen nach Anspruch 6, bei dem das Ethylen-Copolymer mit wenigstens einem aliphatischen α-Olefin b) im Elastomergemisch in einer Menge von 5 bis 20 Teilen pro 100 Teile Kautschuk vorliegt.

8. Reifen nach einem der vorhergehenden Ansprüche, bei dem im Copolymer (b) das aliphatische α-Olefin ein Olefin der Formel CH₂=CH-R ist, worin R eine unverzweigte oder verzweigte C₁₋₁₂-Alkylgruppe darstellt.

9. Reifen nach Anspruch 8, bei dem das aliphatische α-Olefin (b) ausgewählt ist unter Propylen, 1-Buten, Isobutylen, 1-Penten, 4-Methyl-1-penten, 1-Hexen, 1-Octen, 1-Dodecen oder Gemischen davon.

10. Reifen nach Anspruch 9, bei dem das aliphatische α-Olefin 1-Octen ist.

11. Reifen nach einem der vorhergehenden Ansprüche, bei dem im Copolymer (b) das Polyen ein konjugiertes oder nichtkonjugiertes Dien, Trien oder Tetraen ist.

12. Reifen nach Anspruch 11, bei dem das Polyen ein Dien ist.

13. Reifen nach einem der vorhergehenden Ansprüche, bei dem das Ethylen-Copolymer mit wenigstens einem aliphatischen α-Olefin (b) eine Dichte von 0,86 g/cm³ bis 0,93 g/cm³ hat.

14. Reifen nach einem der vorhergehenden Ansprüche, bei dem das Ethylen-Copolymer mit wenigstens einem aliphatischen α-Olefin (b) einen Schmelzindex (SI) von 0,1 g/10 min bis 35 g/10 min hat.

15. Reifen nach einem der vorhergehenden Ansprüche, bei dem das Ethylen-Copolymer mit wenigstens einem aliphatischen α-Olefin (b) einen Schmelzpunkt von mindestens 30°C hat.

16. Reifen nach einem der vorhergehenden Ansprüche, bei dem das Ethylen-Copolymer mit wenigstens einem aliphatischen α-Olefin (b) die folgende Zusammensetzung hat: 50 mol-% - 98 mol-% Ethylen, 2 mol-% - 50 mol% eines aliphatischen α-Olefins und 0 mol-% - 5 mol-% eines Polyens.

17. Reifen nach einem der vorhergehenden Ansprüche, bei dem das Ethylen-Copolymer mit wenigstens einem aliphatischen α-Olefin (b) funktionelle Gruppen enthält, ausgewählt unter Carboxyl-, Anhydrid-, Ester-, Silan- und Epoxidgruppen.

18. Reifen nach Anspruch 17, bei dem die funktionellen Gruppen in einer Menge von 0,05 bis 50 Gew.-Teilen, bezogen auf 100 Gew.-Teile Ethylen-Copolymer mit wenigstens einem aliphatischen α-Olefin (b), vorliegen.

19. Reifen nach einem der vorhergehenden Ansprüche, bei dem das Dienelastomerpolymer (a) eine Glasumwandlungstemperatur (T_{g}) von unter 20°C aufweist.

20. Reifen nach Anspruch 19, bei dem das Dienelastomerpolymer (a) ausgewählt ist aus der Gruppe cis-1,4-Polyisopren, 3,4-Polyisopren, Polybutadien, gegebenenfalls halogenierte Isopren-Isobuten-, 1,3-Butadien-Acrylnitril-, Styrol-1,3-Butadien-, Styrol-Isopren-1,3-Butadien-, Styrol-1,3-Butadien-Acrylnitril-Copolymere oder Gemische davon.

21. Reifen nach Anspruch 20, bei dem das Dienelastomerpolymer (a) durch Umsetzung mit geeigneten Abbruch- oder Kupplungsmitteln funktionalisiert ist.

22. Reifen nach einem der vorhergehenden Ansprüche, bei dem das Elastomergemisch wenigstens ein Elastomerpolymer aus einem oder mehreren Monoolefinen mit einem Olefincomonomer oder Derivaten davon (c) umfasst, wobei das Elastomerpolymer durch eine Schmelzentalpie (ΔHₘ) von unter 15 J/g gekennzeichnet ist.

23. Reifen nach Anspruch 22, bei dem das Elastomerpolymer (c) ausgewählt ist unter Ethylen-Propylen-Copolymeren (EPR) oder Ethylen-Propylen-Dien-Copolymeren (EPDM), Polyisobuten, Butylkautschuken, Halobutylkautschuken oder Gemischen davon.

24. Reifen nach Anspruch 23, bei dem das Elastomerpolymer (c) durch Umsetzung mit geeigneten Abbruch- oder Kupplungsmitteln funktionalisiert ist.

25. Reifen nach einem der vorhergehenden Ansprüche, bei dem wenigstens ein Verstärkungsfüller in einer Menge von 0,1 bis 120 Teilen pro 100 Teile Kautschuk im Elastomergemisch vorliegt.

26. Reifen nach Anspruch 25, bei dem der Verstärkungsfüller Ruß ist.

27. Reifen nach Anspruch 25, bei dem der Verstärkungsfüller Kieselerde ist.

28. Reifen nach Anspruch 27, bei dem das Elastomergemisch ein Kieselerdekupplungsmittel umfasst.

29. Reifenlaufflächenband für Kraftfahrzeugräder, das ein vernetzbares Elastomergemisch umfasst, das
a) wenigstens ein Dienelastomerpolymer und
b) wenigstens ein Ethylencopolymer mit wenigstens einem aliphatischen α-Olefin und gegebenenfalls einem Polyen enthält, wobei das Copolymer durch einen Molekulargewichtsverteilungsindex (MGVI) von unter 5 und durch eine Schmelzenthalpie (ΔHₘ) von wenigstens 30 J/g gekennzeichnet ist.

30. Laufflächenband nach Anspruch 29, bei dem der Molekulargewichtsverteilungsindex (MGVI) 1,5 bis 3,5 beträgt.

31. Laufflächenband nach Anspruch 29, bei dem die Schmelzenthalpie (ΔHₘ) 34 J/g bis 130 J/g beträgt.

32. Laufflächenband nach einem der Ansprüche 29 bis 31, bei dem das Ethylen-Copolymer mit wenigstens einem aliphatischen α-Olefin (b) wie in einem der Ansprüche 5 bis 18 definiert ist.

33. Laufflächenband nach einem der Ansprüche 29 bis 32, bei dem das Dienelastomerpolymer (a) wie in einem der Ansprüche 19 bis 21 definiert ist.

34. Laufflächenband nach einem der Ansprüche 29 bis 33, bei dem das Elastomergemisch wenigstens ein Elastomerpolymer (c) umfasst.

35. Laufflächenband nach Anspruch 34, bei dem das Elastomerpolymer (c) wie in einem der Ansprüche 22 bis 24 definiert ist.

36. Laufflächenband nach einem der Ansprüche 29 bis 35, bei dem wenigstens ein Verstärkungsfüller in einer Menge von 0,1 bis 120 Teilen pro 100 Teile Kautschuk im Elastomergemisch vorliegt.

37. Laufflächenband nach Anspruch 36, bei dem der Verstärkungsfüller Ruß ist.

38. Laufflächenband nach Anspruch 36, bei dem der Verstärkungsfüller Kieselerde ist.

39. Laufflächenband nach Anspruch 38, bei dem das Elastomergemisch ein Kieselerdekupplungsmittel umfasst.

40. Elastomergemisch, das
a) wenigstens ein Dienelastomerpolymer und
b) wenigstens ein Ethylencopolymer mit wenigstens einem aliphatischen α-Olefin und gegebenenfalls einem Polyen enthält, wobei das Copolymer durch einen Molekulargewichtsverteilungsindex (MGVI) von unter 5 und durch eine Schmelzenthalpie (ΔHₘ) von wenigstens 30 J/g gekennzeichnet ist.

41. Elastomergemisch nach Anspruch 40, bei dem der Molekulargewichtsverteilungsindex (MGVI) 1,5 bis 3,5 beträgt.

42. Elastomergemisch nach Anspruch 40, bei dem die Schmelzenthalpie (ΔHₘ) 34 J/g bis 130 J/g beträgt.

43. Elastomergemisch nach einem der Ansprüche 40 bis 42, bei dem das Ethylen-Copolymer mit wenigstens einem aliphatischen α-Olefin (b) wie in einem der Ansprüche 5 bis 18 definiert ist.

44. Elastomergemisch nach einem der Ansprüche 40 bis 43, bei dem das Dienelastomerpolymer (a) wie in einem der Ansprüche 19 bis 21 definiert ist.

45. Elastomergemisch nach einem der Ansprüche 40 bis 44, bei dem das Elastomergemisch wenigstens ein Elastomerpolymer (c) umfasst.

46. Elastomergemisch nach Anspruch 45, bei dem das Elastomerpolymer (c) wie in einem der Ansprüche 22 bis 24 definiert ist.

47. Elastomergemisch nach einem der Ansprüche 40 bis 46, bei dem wenigstens ein Verstärkungsfüller in einer Menge von 0,1 bis 120 Teilen pro 100 Teile Kautschuk vorliegt.

48. Elastomergemisch nach Anspruch 47, bei dem der Verstärkungsfüller Ruß ist.

49. Elastomergemisch nach Anspruch 48, bei dem der Verstärkungsfüller Kieselerde ist.

50. Elastomergemisch nach Anspruch 49, bei dem das Elastomergemisch ein Kieselerdekupplungsmittel umfasst.

51. Vernetztes Elastomerprodukt, hergestellt durch Vernetzung eines Elastomergemisches gemäß einem der Ansprüche 40 bis 50.

## Revendications

1. Pneu pour roues de véhicule, qui comprend au moins un constituant en matière élastomère réticulée, ledit constituant comprenant une composition élastomère renfermant :
(b) au moins un polymère élastomère de diène,
(c) au moins un copolymère d'éthylène avec au moins une α-oléfine aliphatique, et éventuellement un polyène, ledit copolymère étant **caractérisé par** un indice de distribution des masses moléculaires (DMM) inférieur à 5 et par une enthalpie de fusion (ΔH_{f}) non inférieure à 30 J/g.

2. Pneu selon la revendication 1, comprenant :
- une carcasse comportant au moins un pli de carcasse ayant une configuration pratiquement toroïdale, dont les bords latéraux opposés sont associés à des tringles de talon correspondantes à droite et à gauche, chaque tringle de talon étant enfermée dans un talon correspondant,
- une courroie comportant au moins une bande de courroie, appliquée sur la circonférence externe de ladite carcasse,
- une bande de roulement superposée à ladite courroie suivant la circonférence, et
- une paire de flancs appliqués latéralement sur les côtés opposés de ladite carcasse,
pneu pour lequel ledit constituant comprenant une composition élastomère renfermant :
(a) au moins un polymère élastomère de diène,
(b) au moins un copolymère d'éthylène avec au moins une α-oléfine aliphatique, et éventuellement un polyène, ledit copolymère étant **caractérisé par** un indice de distribution des masses moléculaires (DMM) inférieur à 5 et par une enthalpie de fusion (ΔH_{f}) non inférieure à 30 J/g,
est la bande de roulement.

3. Pneu selon la revendication 1 ou 2, pour lequel l'indice de distribution des masses moléculaires (DMM) est compris entre 1,5 et 3,5.

4. Pneu selon la revendication 1 ou 2, pour lequel l'enthalpie de fusion (ΔH_{f}) est comprise entre 34 J/g et 130 J/g.

5. Pneu selon l'une quelconque des revendications précédentes, pour lequel le copolymère (b) d'éthylène et d'au moins une α-oléfine aliphatique est présent dans la composition élastomère en une proportion comprise entre 0,1 partie pour cent (ppc) et 100 parties pour cent (ppc).

6. Pneu selon la revendication 5, pour lequel le copolymère (b) d'éthylène et d'au moins une α-oléfine aliphatique est présent dans la composition élastomère en une proportion comprise entre 3 ppc et 50 ppc.

7. Pneu selon la revendication 6, pour lequel le copolymère (b) d'éthylène et d'au moins une α-oléfine aliphatique est présent dans la composition élastomère en une proportion comprise entre 5 ppc et 20 ppc.

8. Pneu selon l'une quelconque des revendications précédentes, pour lequel l'α-oléfine aliphatique du copolymère (b) est une oléfine de formule CH₂=CH-R, dans laquelle R représente un groupe alkyle linéaire ou ramifié, ayant 1 à 12 atomes de carbone.

9. Pneu selon la revendication 8, pour lequel l'α-oléfine aliphatique est choisie parmi le propylène, le butène-1, l'isobutylène, le pentène-1, le méthyl-4-pentène-1, l'hexène-1, l'octène-1, le dodécène-1 et leurs mélanges.

10. Pneu selon la revendication 9, pour lequel l'α-oléfine aliphatique est l'octène-1.

11. Pneu selon l'une quelconque des revendications précédentes, pour lequel le polyène du copolymère (b) est un diène, triène ou tétraène, conjugué ou non-conjugué.

12. Pneu selon la revendication 11, pour lequel le polyène est un diène.

13. Pneu selon l'une quelconque des revendications précédentes, pour lequel le copolymère (b) d'éthylène et d'au moins une α-oléfine aliphatique a une masse volumique comprise entre 0,86 g/cm³ et 0,93 g/cm³.

14. Pneu selon l'une quelconque des revendications précédentes, pour lequel le copolymère (b) d'éthylène et d'au moins une α-oléfine aliphatique a un indice de fluidité à l'état fondu (IFF) compris entre 0,1 g/10 minutes et 35 g/10 minutes.

15. Pneu selon l'une quelconque des revendications précédentes, pour lequel le copolymère (b) d'éthylène et d'au moins une α-oléfine aliphatique a un point de fusion non-inférieur à 30°C.

16. Pneu selon l'une quelconque des revendications précédentes, pour lequel le copolymère (b) d'éthylène et d'au moins une α-oléfine aliphatique a la composition suivante : 50% en moles à 98% en moles d'éthylène, 2 à 50% en moles d'une α-oléfine aliphatique, 0 à 5% en moles d'un polyène.

17. Pneu selon l'une quelconque des revendications précédentes, pour lequel le copolymère (b) d'éthylène et d'au moins une α-oléfine aliphatique contient des groupes fonctionnels pris parmi les groupes carboxyliques, les groupes anhydrides, les groupes esters, des groupes silyle et des groupes époxyde.

18. Pneu selon la revendication 17, pour lequel les groupes fonctionnels sont présents en une proportion comprise entre 0,05 et 50 parties en poids pour 100 parties en poids du copolymère (b) d'éthylène et d'au moins une α-oléfine aliphatique.

19. Pneu selon l'une quelconque des revendications précédentes, pour lequel le polymère élastomère (a) de diène a une température de transition vitreuse (Tᵥ) inférieure à 20°C.

20. Pneu selon la revendication 19, pour lequel le polymère élastomère (a) de diène est choisi parmi : le polyisoprène 1-4-cis, le polyisoprène 3-4, le polybutadiène, les copolymères d'isoprène et d'isobutène, éventuellement halogénés, les copolymères de butadiène-1,3 et d'acrylonitrile, les copolymères de styrène et de butadiène-1,3, les copolymères de styrène, d'isoprène et de butadiène-1,3, les copolymères de styrène, de butadiène-1,3 et d'acrylonitrile, et leurs mélanges.

21. Pneu selon la revendication 20, pour lequel le polymère élastomère (a) de diène est fonctionnalisé par réaction avec des agents de terminaison ou des agents de couplage appropriés.

22. Pneu selon l'une quelconque des revendications précédentes, pour lequel la composition élastomère comprend au moins un polymère élastomère (c) d'une ou plusieurs mono-oléfines avec un comonomère oléfinique ou ses dérivés, ledit polymère élastomère étant **caractérisé par** une enthalpie de fusion (ΔH_{f}) inférieure à 15 J/g.

23. Pneu selon la revendication 22, pour lequel le polymère élastomère (c) est choisi parmi les copolymères d'éthylène et de propylène (EPR) ou les copolymères d'éthylène, de propylène et de diène (EPDM), le polyisobutène, les butylcaoutchoucs, les halogéno-butylcaoutchoucs, et leurs mélanges.

24. Pneu selon la revendication 23, pour lequel le polymère élastomère (c) est fonctionnalisé par réaction avec des agents de terminaison ou des agents de couplage appropriés.

25. Pneu selon l'une quelconque des revendications précédentes, pour lequel au moins une charge de renforcement est présente dans la composition élastomère, en une proportion comprise entre 0,1 ppc et 120 ppc.

26. Pneu selon la revendication 25, pour lequel la charge de renforcement est du noir de carbone.

27. Pneu selon la revendication 25, pour lequel la charge de renforcement est de la silice.

28. Pneu selon la revendication 27, pour lequel la composition élastomère comprend un agent de couplage de la silice.

29. Bande de roulement de pneu pour roues de véhicule, qui comprend une composition élastomère réticulable renfermant :
a) au moins un polymère élastomère de diène,
b) au moins un copolymère d'éthylène avec au moins une α-oléfine aliphatique, et éventuellement un polyène, ledit copolymère étant **caractérisé par** un indice de distribution des masses moléculaires (DMM) inférieur à 5 et par une enthalpie de fusion (ΔH_{f}) non-inférieure à 30 J/g.

30. Bande de roulement selon la revendication 29, pour laquelle l'indice de distribution des masses moléculaires (DMM) est compris entre 1,5 et 3,5.

31. Bande de roulement selon la revendication 29, pour laquelle l'enthalpie de fusion (ΔH_{f}) est comprise entre 34 J/g et 130 J/g.

32. Bande de roulement selon l'une quelconque des revendications 29 à 31, pour laquelle le copolymère (b) d'éthylène et d'au moins une α-oléfine aliphatique est un copolymère tel que défini dans l'une quelconque des revendications 5 à 18.

33. Bande de roulement selon l'une quelconque des revendications 29 à 32, pour laquelle le polymère élastomère (a) de diène est un polymère tel que défini dans l'une quelconque des revendications 19 à 21.

34. Bande de roulement selon l'une quelconque des revendications 29 à 33, pour laquelle la composition élastomère comprend au moins un polymère élastomère (c).

35. Bande de roulement selon la revendication 34, pour laquelle le polymère élastomère (c) est un polymère tel que défini dans l'une quelconque des revendications 22 à 24.

36. Bande de roulement selon l'une quelconque des revendications 29 à 35, pour laquelle au moins une charge de renforcement est présente dans la composition élastomère, en une proportion comprise entre 0,1 ppc et 120 ppc.

37. Bande de roulement selon la revendication 36, pour laquelle la charge de renforcement est du noir de carbone.

38. Bande de roulement selon la revendication 36, pour laquelle la charge de renforcement est de la silice.

39. Bande de roulement selon la revendication 38, pour laquelle la composition élastomère comprend un agent de couplage de la silice.

40. Composition élastomère qui comprend :
a) au moins un polymère élastomère de diène,
b) au moins un copolymère d'éthylène avec au moins une α-oléfine aliphatique, et éventuellement un polyène, ledit copolymère étant **caractérisé par** un indice de distribution des masses moléculaires (DMM) inférieur à 5, et par une enthalpie de fusion (ΔH_{f}) non-inférieure à 30 J/g.

41. Composition élastomère selon la revendication 40, pour laquelle l'indice de distribution des masses moléculaires (DMM) est compris entre 1,5 et 3,5.

42. Composition élastomère selon la revendication 40, pour laquelle l'enthalpie de fusion (ΔH_{f}) est comprise entre 34 J/g et 130 J/g.

43. Composition élastomère selon l'une quelconque des revendications 40 à 42, pour laquelle le copolymère (b) d'éthylène et d'au moins une α-oléfine aliphatique est un copolymère tel que défini dans l'une quelconque des revendications 5 à 18.

44. Composition élastomère selon l'une quelconque des revendications 40 à 43, pour laquelle le polymère élastomère de diène (a) est un polymère tel que défini dans l'une quelconque des revendications 19 à 21.

45. Composition élastomère selon l'une quelconque des revendications 40 à 44, qui comprend au moins un polymère élastomère (c).

46. Composition élastomère selon la revendication 45, dont le polymère élastomère (c) est un polymère tel que défini dans l'une quelconque des revendications 22 à 24.

47. Composition élastomère selon l'une quelconque des revendications 40 à 46, dans laquelle au moins une charge de renforcement est présente, en une proportion comprise entre 0,1 ppc et 120 ppc.

48. Composition élastomère selon la revendication 47, dont la charge de renforcement est du noir de carbone.

49. Composition élastomère selon la revendication 47, dont la charge de renforcement est de la silice.

50. Composition élastomère selon la revendication 49, qui renferme un agent de couplage de la silice.

51. Produit manufacturé élastomère réticulé, obtenu par réticulation d'une composition élastomère telle que définie dans l'une quelconque des revendications 40 à 50.
